# EUROPEAN PATENT APPLICATION

(11) **EP 2 249 617 A1**
(43) Date of publication of application: **10.11.2010**
(21) Application number: 10290002.4
(22) Date of filing: 05.01.2010
(51) Int. Cl.: H05B 3/14, H05B 3/82, F24H 9/20

(54) **Carbon fiber heating source and heating system using the same**

(30) Priority: 08.05.2009 KR 20090040478; 08.05.2009 KR 20090040483; 08.05.2009 KR 20090040489
(71) Applicant: Eco Carbon Energy Inc., Daegu (KR)
(72) Inventor: Song, Young Han, Daegu (KR)
(74) Representative: Noel, Chantal Odile

(57) **Abstract**

Provided is a carbon fiber heating source that includes a bundle of carbon fibers combined with a predetermined amount of glass fibers, wherein the bundle is surrounded with a silicone coating layer, and has high tensile strength responsive to bending and tension while emitting heat at high temperature. The carbon fiber heat emitting source includes: heat emitting fibers formed by combining at least one carbon fibers with glass fibers at a predetermined ratio; connection terminals formed at both ends of the heat emitting fibers so that electricity is applied thereto from an electricity supplying wire; and a coating member with which the surfaces of the heat emitting fibers and the connection terminals are coated. The coating member may be a silicone coating layer formed on and in contact with the surfaces of the heat emitting fibers and the connection terminals. The heat emitting fibers may be obtained by combining carbon fibers, glass fibers and at least one polyester fiber. The heat emitting fibers may be wound on an aluminum rod at predetermined intervals, and then heated to a temperature of 1500-2000°C in a heating chamber so that multiple strands of the fibers are bound integrally with each other to form a spiral shape. The coating member may be a quartz pipe, the internal space of which is filled with LPG and hydrogen and receives and seals the heat emitting fibers in such a manner that only a portion of the connection terminals is exposed from the both ends.

## Description

### BACKGROUND OF THE INVENTION

### Field of the Invention

The present invention relates to a high-temperature heat emitting source and, more particularly, to a carbon fiber heating source that includes a bundle of carbon fibers combined with a predetermined amount of glass fibers, wherein the bundle is surrounded with a silicone coating layer, and has high tensile strength responsive to bending and tension while emitting heat at high temperature.

### Description of Related Art

In general, various heating systems, such as boilers or water heaters, requiring high temperature are provided with a high-temperature heat emitting source. Such heating systems produce hot water or hot air by heating water or air with the heat emitted or radiated from the heat emitting source. Currently, most heating systems are based on the combustion heat obtained from the combustion of coal or petroleum, or the Joule heat of a heat emitting source using electricity.

However, recently, use of boilers or air heaters based on coal or petroleum has been gradually reduced due to the problems of environmental pollution, including air pollution, and an increase in cost resulting from exhaustion of raw materials. Under these circumstances, use of electric boilers or electric water heaters based on electricity has been gradually increased.

Such electric heating technologies include methods for heating cold water circulating inside a boiler or for heating air passing through an air heater with the Joule heat generated upon the application of electric current to a heat emitting source formed by winding metal wires, such as nichrome wires, having high electric resistance in the form of a coil.

However, the above-mentioned coil type heat emitting source emits heat at a predetermined high temperature in the presence of a high electric current flowing therethrough. Moreover, such heat emission requires a long time, resulting in high electric power consumption.

In addition, the coil inherently emits electromagnetic waves (EMI) harmful to the human bodies under high electric current. Further, when the heat emitting source is used for a long time, electrical accidents, such as fire accidents, may occur due to the disconnection, electric leakage, electric shock or overheating.

To solve the above-mentioned problems, a method for directly heating circulating cold water by applying a carbon fiber heat emitting source to a boiler has been suggested, wherein the carbon fiber heat emitting source is formed by coating glass fibers with a foamed carbon liquid, inserting the coated carbon fibers into a vacuum pipe, sealing the vacuum pipe under vacuum, and supplying electric power to both ends of the pipe.

The above-mentioned method reduces power consumption as compared to the conventional nichrome wire heat emitting source and prevents generation of harmful electromagnetic waves. However, the method is problematic in that the vacuum pipe prevents effective transfer from the carbon fibers to the exterior.

In addition, the above carbon fiber heat emitting source is obtained by a complicated process requiring a long time and high cost. Moreover, the carbon fibers may be easily broken or damaged due to their weak resistance against impact and tension. Further, the carbon fibers cannot be bent or folded, and thus should be used in their original forms.

### SUMMARY OF THE INVENTION

The present invention has been made in view of the above problems, and an object of the present invention is to provide a carbon fiber heat emitting source formed by providing a bundle of carbon fibers combined with a predetermined amount of glass fibers and by surrounding the bundle with a coating layer, as well as a heating system using the same. The carbon fiber heat emitting source has high tensile strength while emitting heat at high temperature so that it may not be broken or damaged under tension, may be deformed with ease, and may be applied to boilers and water heaters.

Another object of the present invention is to provide a nanocarbon heater formed by inserting and sealing carbon fiber yarns into a quartz pipe along with LPG and hydrogen and by exposing connection terminals of nickel wires at both ends of the pipe. The nanocarbon heater may be used as a heat emitting source for a heating lamp, air heater, heating pipe and boiler to provide excellent heating efficiency, to maintain a clear indoor environment by avoiding direct combustion of oxygen, and to help growth of humans, animals and crops by the emission of far infrared rays and anions.

Still another object of the present invention is to provide a carbon fiber heat emitting source for a heat exchanger, obtained by providing a bundle of carbon fibers combined with a predetermined amount of glass fibers, coating and binding the outer surface of the bundle with an inorganic heat resistant ceramic adhesive to form a carbon fiber heat emitting wire, and winding the carbon fiber heat emitting wire onto the exterior of a water channel pipe, as well as an electric boiler using the same. The carbon fiber heat emitting source directly heats water and efficiently produces hot water via rapid heat exchange. Thus, the electric boiler using the carbon fiber heat emitting source stably and efficiently produces hot water with low power consumption.

To achieve the objects of the present invention, one aspect of the present invention provides a carbon fiber heat emitting source, including: heat emitting fibers formed by combining at least one carbon fibers with glass fibers at a predetermined ratio; connection terminals formed at both ends of the heat emitting fibers so that electricity is applied thereto from an electricity supplying wire; and a coating member with which the surfaces of the heat emitting fibers and the connection terminals are coated.

The coating member may be a silicone coating layer formed on and in contact with the surfaces of the heat emitting fibers and the connection terminals.

The heat emitting fibers may be obtained by combining 60%-95% of carbon fibers with 40%-5% of glass fibers.

The heat emitting fibers may be obtained by combining carbon fibers, glass fibers and at least one polyester fiber.

The heat emitting fibers may be wound on an aluminum rod at predetermined intervals, and then heated to a temperature of 1500-2000°C in a heating chamber so that multiple strands of the fibers are integrally bound with each other to form a spiral shape.

The connection terminals may be formed integrally with both ends of the heat emitting fibers by welding nickel wires to the both ends.

The coating member may be a quartz pipe, the internal space of which is filled with LPG and hydrogen and receives and seals the heat emitting fibers in such a manner that only a portion of the connection terminals is exposed from the both ends.

In one embodiment, the heat emitting source may further include: a reflection plate installed on the rear surface of the quartz pipe to reflect the heat; electric wires connected to the connection terminals at both ends of the quartz pipe; and a power source for supplying electric power through the electric wires to heat the carbon fibers.

In another embodiment, the heat emitting source may further include: a heating pipe formed of a corrugated stainless steel pipe, polyethylene (PE) pipe or XL pipe and receiving a plurality of the quartz pipes aligned in a line at predetermined intervals; electric wires connected to the connection terminals at both ends of the quartz pipes provided in the heating pipe in such a manner that the quartz pipes are connected in parallel; and a power source for supplying electric power through the electric wires to heat the carbon fibers.

In still another embodiment, the heat emitting source may further include a water channel pipe through which water flows, wherein the heat emitting fibers are wound along the outer circumferential surface of the water channel pipe in a spiral shape at an interval of 2 mm to 20 mm, and the coating member may be a heat resistant coating layer with which the water channel pipe and the heat emitting fibers are surrounded.

The heat emitting fibers may be formed by providing a bundle of carbon fibers combined with a predetermined amount of glass fibers, and coating the outer surface of the bundle with an inorganic heat resistant ceramic adhesive containing silicon dioxide, zirconia and ceramic ingredients to a thickness of 0.3 mm to 0.5 mm so that the fibers are bound integrally with each other.

Further, another aspect of the present invention provides a heating system for heating water introduced into a hot water tank using the carbon fiber heat emitting source. The heating system includes: the carbon fiber heat emitting source (as defined in claim 2 hereinafter) formed inside of the hot water tank for heating the water introduced thereto; a water feeding line for feeding the water heated in the hot water tank to the exterior; a piping line through which the water heated in the hot water tank is circulated; a temperature sensor for detecting the temperature of the hot water in the hot water tank; and a control unit for controlling the electricity supply from the electric wires depending on the temperature of the hot water in the hot water tank detected by the temperature sensor.

In one embodiment, the heating system may further include: a cold water feeding pipe through which drinking water is introduced into the hot water tank; and a hot water supplying pipe through which the hot water heated in the hot water tank is supplied.

The heat emitting source may be provided in the form of a coil wound in the vertical direction at an interval of about 2 mm to 5 mm inside the hot water tank.

In another embodiment, the heating system using the carbon fiber heat emitting source as disclosed herein includes: a heating chamber having an internal space, an inlet formed at one side thereof for introducing air, and an outlet formed at the other side thereof for ejecting heated air; a fan formed in the vicinity of the inlet to force the external air to be sucked into the heating chamber; a plurality of the carbon fiber heat emitting sources (as defined in claim 7 hereinafter) aligned in parallel along the longitudinal direction in the heating chamber; electric wires connected to the connection terminals formed at both ends of the carbon fiber heat emitting sources in such a manner that the quartz pipes are connected in parallel; and a power source for supplying electric power through the electric wires to heat the heat emitting fibers.

In still another embodiment, the heating system using the carbon fiber heat emitting source as disclosed herein includes: a heat exchanger having an internal space, an inlet formed at one side thereof for introducing water, and an outlet formed at the other side thereof for ejecting heated water; a heating chamber formed in the internal space of the heat exchanger; a plurality of the carbon fiber heat emitting sources (as defined in claim 7 hereinafter) aligned in parallel along the longitudinal direction in the heating chamber; electric wires connected to the connection terminals formed at both ends of the carbon fiber heat emitting sources in such a manner that the quartz pipes are connected in parallel; a power source for supplying electric power through the electric wires to heat the heat emitting fibers; and a hot water exchange chamber formed at the top of the heating chamber for warming hot water stored in the heating chamber.

In yet another embodiment, the heating system using the carbon fiber heat emitting source as disclosed herein includes: an outer casing including a glass fiber heat insulating layer on the inner surface thereof and having an internal space; the above-described carbon fiber heat emitting source (as defined in claim 10 hereinafter) provided in the outer casing; a cold water inlet formed at one end of the carbon fiber heat emitting source for introducing cold water into the water channel pipe; a hot water outlet formed at the other end of the carbon fiber heat emitting source for discharging hot water heated through the water channel pipe to the exterior; a circulation pump for circulating water in the water channel pipe through the cold water inlet and the hot water outlet; and a power source connected to both ends of the carbon fiber heat emitting source for supplying electricity.

The carbon fiber heat emitting source according to the present invention includes a bundle of a predetermined amount of glass fibers in combination with carbon fibers emitting heat upon the application of electricity. Thus, the carbon fiber heat emitting source has high tensile strength derived from the glass fibers and is flexible so that the carbon fiber heat emitting source may be bent in multiple directions. Additionally, the carbon fiber heat emitting source ensures safety so that the carbon fibers are not broken or damaged even under tension. Further, the carbon fiber heat emitting source provides high energy efficiency because it emits heat at high temperature in a short time with low power consumption. Therefore, when the carbon fiber heat emitting source is applied as a heater for a boiler or water heater, the heater has a simple structure, low power consumption and high efficiency.

In addition, according to one embodiment of the present invention, carbon fiber yarns formed by twisting multiple strands of the yarns to reinforce tensile force are wound onto an aluminum rod together with polyester yarns at predetermined intervals, thereby forming a coil-like shape. While the aluminum rod is heated to a temperature of 1500-2000°C in a heating chamber, the polyester yarns are molten so that the multiple strands of the carbon fiber yarns are integrated therewith and get elasticity. Then, nickel wires are welded integrally to both ends of the carbon fiber yarns having reinforced tensile force, so that they function as connection terminals for supplying electric power. After that, the carbon fiber yarns are inserted into a quartz pipe, LPG and hydrogen are filled into the quartz pipe under vacuum, and both ends of the quartz pipe are sealed in such a manner that only the both ends of the pipe are exposed, thereby finishing a nanocarbon heater. The nanocarbon heater is installed in front of a reflective plate and electric wires are connected to both connection terminals, thereby providing a heating lamp that allows heating of an indoor space, shows a high calorific value with low power consumption, maintains a clear indoor environment, emits anions and far infrared rays, and is favorable to the human bodies, animals and crops.

Further, according to another embodiment of the carbon fiber heat emitting source for a heat exchanger and an electric boiler using the same, the carbon fiber heat emitting source includes a bundle of carbon fibers emitting heat at high temperature upon the application of electricity in combination with a predetermined amount of glass fibers, wherein the carbon fibers and glass fibers are bound integrally with each other by an inorganic heat resistant ceramic adhesive. Since the carbon fiber heat emitting source is wound onto a water channel pipe, it directly heats the water flowing through the water channel pipe directly. In this manner, it is possible to perform highly efficient heat exchange, to produce hot water with low power consumption, to realize high tensile strength and flexibility derived from the glass fibers, to prevent oxidation by the inorganic heat resistant ceramic adhesive coating, to prevent electrical accidents by a heat resistant coating layer, and to realize high safety during use.

### BRIEF DESCRIPTION OF THE DRAWINGS

Fig. 1 is a perspective view illustrating a carbon fiber heat emitting source according to one embodiment of the present invention.

Fig. 2 is a schematic view illustrating a boiler as a heating system according to one embodiment of the present invention.

Fig. 3 is a schematic view illustrating a water heater as a heating system according to another embodiment of the present invention.

Fig. 4 is a schematic view illustrating the process for manufacturing a carbon fiber heat emitting source according to another embodiment of the present invention.

Fig. 5 is a sectional view illustrating a heating lamp using the carbon fiber heat emitting source according to the embodiment as shown in Fig. 4.

Fig. 6 is a schematic view illustrating an air heater using the carbon fiber heat emitting source according to the embodiment as shown in Fig. 4.

Fig. 7 is a schematic view illustrating a heating pipe as a heating system according to still another embodiment of the present invention.

Fig. 8 is a schematic view illustrating a nanocarbon boiler as a heating system according to still another embodiment of the present invention.

Fig. 9 is a perspective view illustrating a carbon fiber heat emitting source according to another embodiment of the present invention.

Fig. 10 is a sectional view of the carbon fiber heat emitting source as shown in Fig. 9.

Fig. 11 is a schematic view illustrating an electric boiler as a heating system according to yet another embodiment of the present invention.

[Detailed Description of Main Elements]
- 110:: carbon fiber heat emitting source
- 111:: carbon fibers 112: glass fibers
- 113:: electric wires 114: connection fixing member
- 115:: silicone coating layer 120: boiler
- 130:: water heater 121, 131: hot water tank
- 122:: piping line 123: water feed line
- 132:: cold water feed line 133: hot water feed line
- 124, 134:: control unit 125, 135: temperature sensor
- 201:: carbon fibers 202: polyester fibers
- 203:: aluminum rod 204: heating chamber
- 205:: connection terminal 206: quartz pipe
- 210:: carbon fiber heat emitting source
- 211:: heating lamp 221: air heater
- 231:: heating pipe 241: nanocarbon boiler
- 301:: electric boiler
- 310:: carbon fiber heat emitting source
- 311:: water channel pipe
- 312:: carbon fiber heat emitting wire
- 313:: carbon fibers 314: glass fibers
- 315:: inorganic heat resistant ceramic adhesive
- 316:: heat resistant coating layer
- 310a:: cold water inlet 310b: cold water outlet
- 310c:: circulation pump 330: outer casing
- 320:: glass fiber heat insulation layer
- 340:: power source

### DESCRIPTION OF SPECIFIC EMBODIMENTS

The advantages, features and aspects of the invention will become apparent from the following description of the embodiments with reference to the accompanying drawings, which is set forth hereinafter.

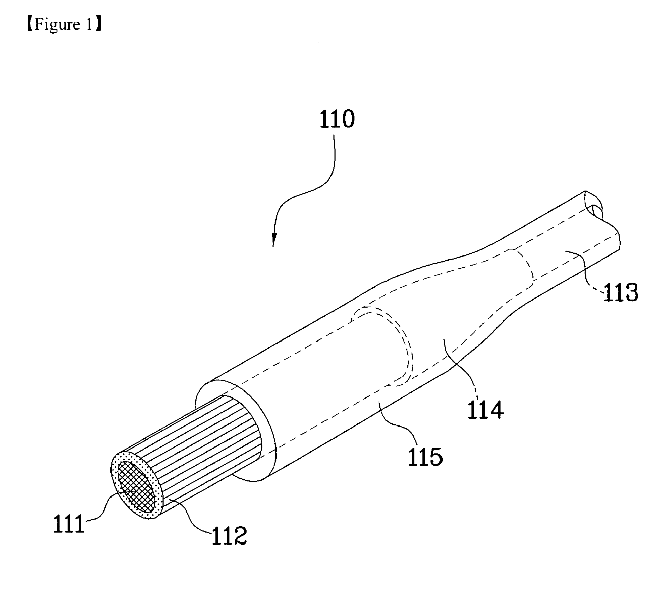

Fig. 1 is a perspective view illustrating a carbon fiber heat emitting source according to one embodiment of the present invention.

As shown in Fig. 1, the carbon fiber heat emitting source 110 is formed by providing a bundle of two or more strands of carbon fibers 111 emitting heat at high temperature upon the application of electricity and having a predetermined length. When providing a bundle of carbon fibers 111, a predetermined amount of glass fibers 112 having the same length are combined with the carbon fibers 111.

According to the combination of the carbon fibers 111 with the glass fibers 112, the glass fibers 112 having high tensile strength against the external force, including tension or bending force applied to either or both sides of the carbon fibers 111, functions to support the carbon fibers 111. Thus, the glass fibers 112 prevent the carbon fibers 111 from being damaged by external force and ensure high safety.

The combination of the carbon fibers 111 with the glass fibers 112 is made by controlling the ratio of the carbon fibers 111 to the glass fibers 112 to 60%-95% : 40%-50%. That is, a high proportion of carbon fibers 111 may be used to increase the calorific value and heat efficiency. Otherwise, a relatively high proportion of the glass fibers 112 may be used to ensure high tensile strength and safety. Thus, the combination ratio may be varied depending on the particular use and desired calorific value.

In addition, metallic electric wires 113 are connected to both ends of the carbon fibers 111 in order to supply electricity to the carbon fibers 111. After the electric wires 113 are connected to the carbon fibers 111, the carbon fibers 111 and the electric wires 113 are bound and fixed tightly with each other by a connection fixing member 114 having a predetermined width. Then, the surface of the bundle, formed by combining the carbon fibers 111 with the glass fibers 112 and connecting the electric wires to the carbon fibers 111, is coated with a silicone coating layer 115, thereby providing a carbon fiber heat emitting source 110.

The above-described carbon fiber heat emitting source 110 are advantageous in that it has high heat conductivity, high strength and low heat expansion behavior due to the use of the carbon fibers 111. In addition, when applying electricity through the electric wires 113, the carbon fiber heat emitting source emits heat at high temperature more rapidly with lower power consumption than the conventional heat emitting source using nichrome wires, thereby significantly reducing electric power consumption. Further, the use of a predetermined amount of glass fibers 112 having high tensile strength prevents breakage of the carbon fibers, thereby improving the safety. Moreover, the carbon fiber heat emitting source is surface-coated with a silicone coating layer 115 having high insulation property, thereby preventing electrical accidents caused by the electricity flowing through the carbon fibers 111.

In the above-described carbon fiber heat emitting source 110, the silicone coating layer 115 coated on the surface thereof has a melting point of about 250°C. When the carbon fiber heat emitting source 110 emits heat in the air, the silicone coating layer 115 may be molten by being heated to a temperature above its melting point. Under these circumstances, the carbon fiber heat emitting source 110 may be broken or may cause electric leakage or fire accidents. Therefore, it is preferred that the carbon fiber heat emitting source 110 is introduced into water and is allowed to perform heat exchange with circulating water so that it maintains a temperature of 100-150°C, and thus prevents the silicone coating layer 115 from melting.

Furthermore, since the silicone coating layer 115 has excellent waterproof property, it prevents water from penetrating into the carbon fibers 111 and the connection fixing member 114, thereby preventing electrical accidents, such as electric leakage, effectively.

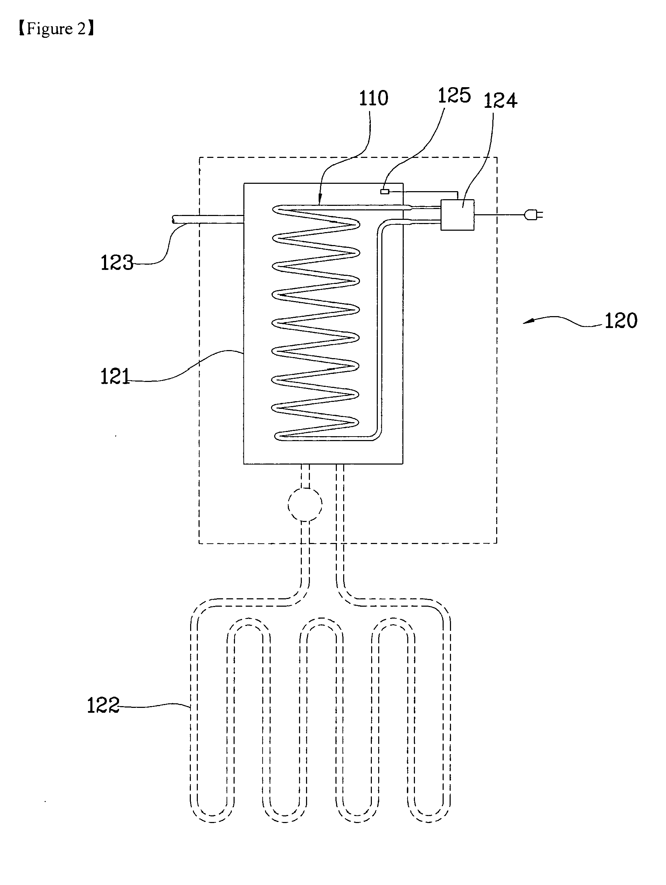

Fig. 2 is a schematic view illustrating a boiler as a heating system according to one embodiment of the present invention.

As shown in Fig.1, the carbon fiber heat emitting source 110 introduced into water during use is suitable for providing a boiler 120 and a water heater 130 using hot water. Hereinafter, such a boiler 120 and water heater 130 using the carbon fiber heat emitting source 110 according to the present invention will be explained in more detail.

First, as shown in Fig. 2, the boiler 120 generally heats cold water introduced into a hot water tank 121 to a predetermined temperature by using a heating system. The hot water heated by the heating system is circulated through a piping line 122 to warm floors, or is passed through a water feed line 123 to feed hot water to a washstand, etc. Herein, the heating system of the boiler 120 includes the carbon fiber heat emitting source 110. In this manner, a boiler 120 using the carbon fiber heat emitting source 110 is provided.

In other words, the carbon fiber heat emitting source 110 is provided at one side of the hot water tank 121 and both ends of the carbon fiber heat emitting source are located outside of the hot water tank 121. Additionally, the boiler 120 includes a control unit 124 connected to the electric wires 113 for supplying electricity while detecting the temperature with a temperature sensor 125 in the hot water tank 121.

Herein, when the carbon fiber heat emitting source 110 is provided in the form of a simple straight line inside the hot water tank 121, it provides a small heat emitting area and consumes a large amount of electric power to perform heat emission at high temperature, and thus it is not sufficient to perform heat exchange of the whole water in the hot water tank 121. For this reason, the carbon fiber heat emitting source 110 may be wound in the form of a coil at a predetermined small interval of about 2 mm to 5 mm, or may be wound on an internal core material, such as a rod-like body, in the form of a coil. In this manner, it is possible to increase the heat emission area of the adjacent carbon fiber heat emitting sources 110, to perform heat emission at high temperature with low power consumption and to improve the heat conductivity, thereby providing hot water efficiently in a short time.

Even when the carbon fiber heat emitting source 110 is folded or wound as mentioned above, the glass fibers 112 maintaining high tensile strength prevent the carbon fibers 111 from being cut or damaged, thereby ensuring high safety.

In the boiler, the control unit 124 detects the temperature inside the hot water tank 121 through the temperature sensor 124, and then supplies electricity to the electric wires 113 to heat the water in the hot water tank 121 to a predetermined temperature, so that the carbon fiber heat emitting source 110 emits heat. The carbon fiber heat emitting source 110 performs heat exchange with the cold water in the hot water tank 121 to allow the hot water at a temperature of about 100-150°C to be circulated along the piping line 122 or to be fed through the water feed line 123. In addition, the temperature of the hot water may be controlled with ease by adjusting the electricity supplied to the electric wires 113 and the temperature of the carbon fiber heat emitting source 110.

The boiler 120 as described above has a simple and compact structure, is manufactured in a simple manner, is maintained and repaired with ease, is cost-efficient, and performs heat emission at high temperature rapidly with low power consumption, thereby reducing electric power consumption. In addition, the silicone surface coating layer 115 prevents various electrical accidents to provide high safety, is so hygienically acceptable and safe that water may be in direct contact with the coating layer, and thus shows high heat conductivity.

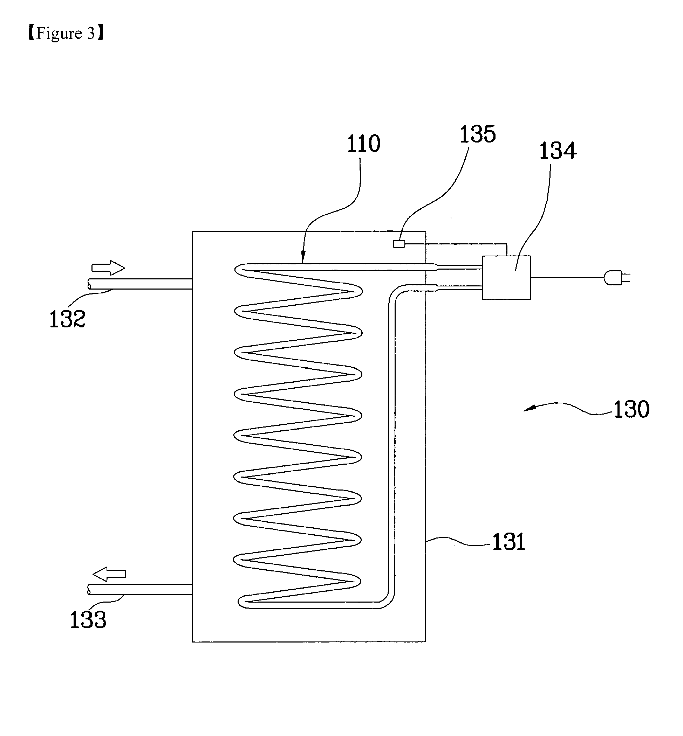

Next, Fig. 3 is a schematic view illustrating a water heater as a heating system according to another embodiment of the present invention.

In the water heater 130 as shown in Fig. 3, drinking water is introduced into a hot water tank 131 via a cold water feed line 132, and then is heated to a predetermined temperature by a heating system. Then, the heated water is fed through a hot water feed line 133. Herein, the heating system of the water heater 130 includes the carbon fiber heat emitting source 110. In this manner, a water heater 130 using the carbon fiber heat emitting source 110 is provided.

In other words, like the boiler 120 using the carbon fiber heat emitting source 110, the carbon fiber heat emitting source 110 is provided at one side in the hot water tank 131 and both ends of the carbon fiber heat emitting source are located outside of the hot water tank 131. Additionally, the water heater 130 includes a control unit 134 connected to the electric wires 113 for supplying electricity while detecting the temperature with a temperature sensor 135 in the hot water tank 131.

Similarly, the carbon fiber heat emitting source provided in the hot water tank 131 may be wound in the form of a coil at a predetermined small interval of about 2 mm to 5 mm, or may be wound on an internal core material, such as a rod-like body, in the form of a coil. In this manner, it is possible to increase the heat emission area of the adjacent carbon fiber heat emitting sources 110, to perform heat emission at high temperature with low power consumption and to improve the heat conductivity, thereby providing hot water efficiently in a short time.

In the water heater, the control unit 134 detects the temperature inside the hot water tank 131 through the temperature sensor 134, and then supplies electricity to the electric wires 113 to heat the drinking water in the hot water tank 131 to a predetermined temperature, so that the carbon fiber heat emitting source 110 emits heat. The carbon fiber heat emitting source 110 performs heat exchange with the drinking water in the hot water tank 131, thereby feeding drinking water at a temperature of about 40-100°C acceptable for drinking through a hot water feed line 133. In addition, the temperature of the hot water may be controlled with ease by adjusting the electricity supplied to the electric wires 113 and the temperature of the carbon fiber heat emitting source 110.

The water heater 130 as described above also has a simple and compact structure, is manufactured in a simple manner, is maintained and repaired with ease, is cost-efficient, and performs heat emission at high temperature rapidly with low power consumption, thereby reducing electric power consumption. In addition, the silicone surface coating layer 115 prevents various electrical accidents to provide high safety, is so hygienically acceptable that drinking water may be in direct contact with the coating layer safely without any contamination, and thus shows high heat conductivity.

According to the carbon fiber heat emitting source 110 as described above, the carbon fibers 112 allow heat emission at high temperature with low power consumption in a short time, and the glass fibers 112 combined with the carbon fibers at a predetermined ratio impart high tensile strength to the whole carbon fiber heat emitting source 110. Therefore, the carbon fiber heat emitting source 110 is not broken or damaged even under tension, thereby ensuring high safety and realizing flexibility. Further, the silicone coating layer 115 used to finish the carbon fiber heat emitting source enables safe and hygienic application in water.

In addition, the boiler 120 and the water heater 130 using the carbon fiber heat emitting source 110 as a heating system show high heat conductivity sufficient to provide hot water in a short time, have a simple and compact structure, allow easy maintenance and repairing, reduce electric power consumption, and enable safe and hygienic applications.

In another embodiment, the carbon fiber heat emitting source 110 provided in each hot water tank 121, 131 of the boiler 120 or the water heater 130 may be inserted tightly into a pipe, such as a quartz glass pipe, stainless steel pipe or copper pipe, in order to improve the safety by preventing direct contact with water, and to facilitate fixing of the flexible carbon fiber heat emitting source 110.

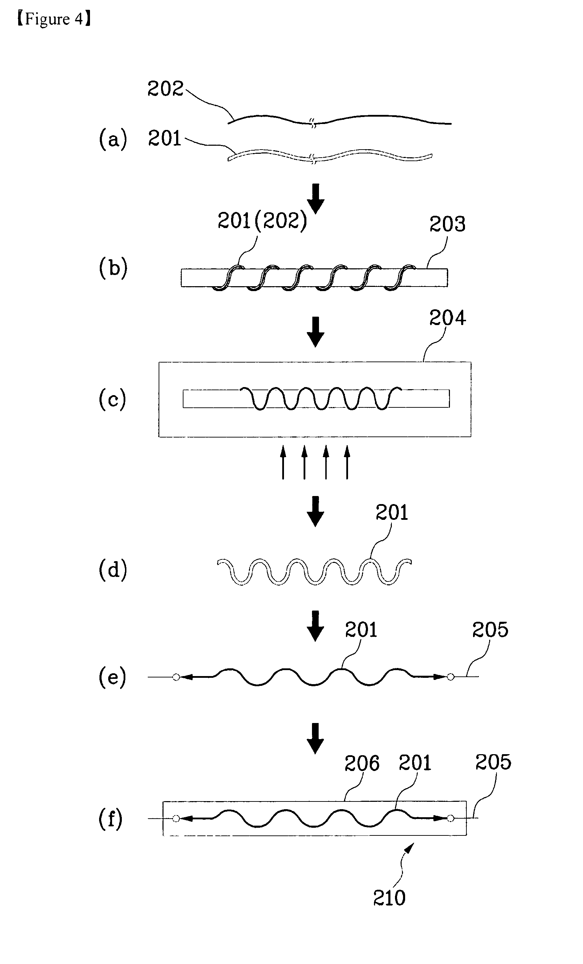

Fig. 4 is a schematic view illustrating the process for manufacturing a carbon fiber heat emitting source according to another embodiment of the present invention.

As shown in Fig. 4, the carbon fiber heat emitting source according to the present invention may be obtained by a specific process, including providing carbon fibers 201 having multiple twisted strands to reinforce tensile force and winding the carbon fibers 201 on an aluminum rod 203 together with polyester fibers 202 at predetermined intervals.

Then, the aluminum rod 203 on which the carbon fibers 201 are wound is heated at 1500-2000°C in a heating chamber 204, so that the carbon fibers get elasticity and multiple strands of the carbon fibers are integrated, while the polyester fibers 202 are molten.

In addition, nickel wires are welded integrally to both ends of the carbon fibers 201 having multiple twisted strands to reinforce tensile force, so that the nickel wires function as connection terminals 205 for supplying electric power.

While the carbon fibers 201 are inserted into a quartz pipe 206 and LPG and hydrogen are filled into the pipe, both ends of the pipe are sealed in such a manner that only the connection terminals 205 are exposed, thereby providing a carbon fiber heat emitting source 210.

More particularly, the carbon fiber heat emitting source 10 obtained as described above maintains its coil-like shape by winding the carbon fibers 201 having multiple twisted strands to reinforce tensile force together with the polyester fibers 202 on the aluminum rod 203 at predetermined intervals.

The aluminum rod 203 on which the carbon fibers 201 are wound is heated at 1500-2000°C in a heating chamber 204, so that multiples strands of the carbon fibers are integrated and get elasticity while the polyester fibers 202 are molten.

Then, nickel wires are welded integrally to both ends of the carbon fibers 201 having multiple twisted strands to reinforce tensile force, thereby forming connection terminals 205 for supplying electric power.

While the carbon fibers 201 are inserted into a quartz pipe 206 and LPG and hydrogen are filled into the pipe, both ends of the pipe are sealed in such a manner that only the connection terminals 205 are exposed. When supplying electric power through the connection terminals 205, the carbon heater 210 emits heat by the current flowing through the carbon fibers 201, while the LPG and hydrogen filled in the quartz pipe 206 undergo combustion in portions to generate a large amount of heat and light and to emit anions and far infrared rays.

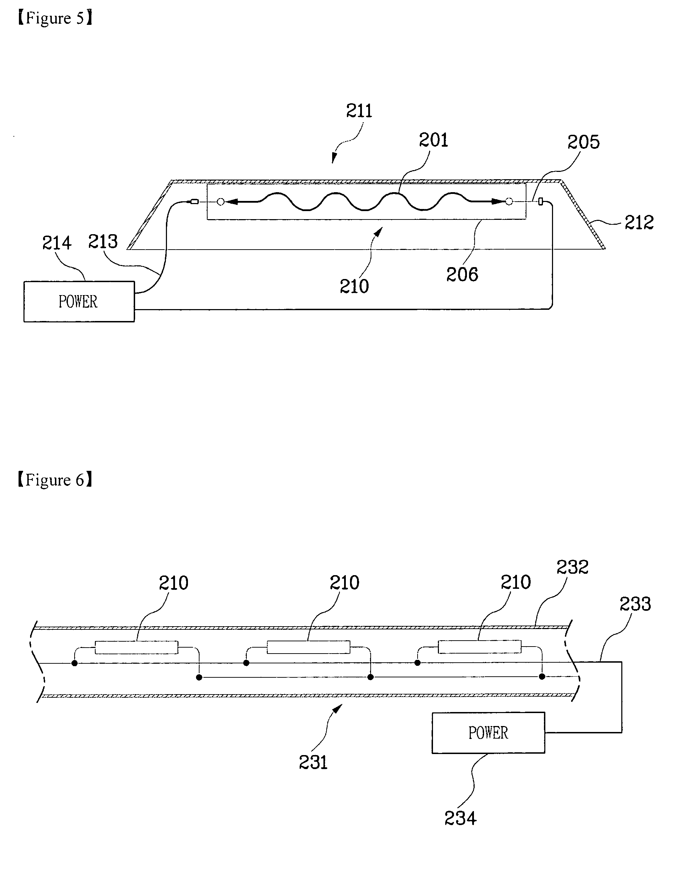

Fig. 5 is a sectional view illustrating a heating lamp using the carbon fiber heat emitting source according to the embodiment as shown in Fig. 4.

The carbon fiber heat emitting source 210 is installed in front of a reflection plate 212. Next, electric wires 213 are connected to both connection terminals 205 and electric power is applied from a power source 214 under the condition of 460 V, 10 A, so that the heating lamp 211 emits heat. The heating lamp warms an indoor space in which it is installed with a high calorific value under low power consumption. When the nanocarbon heater 210 including carbon fibers 210 therein emits heat, anions and far infrared rays favorable to the human bodies, animals and crops are also emitted while maintaining a clear indoor environment.

The above-described heating system using the carbon fiber heat emitting source 210 causes no combustion of carbon in the indoor environment, and thus maintains a clear indoor environment. In addition, the anions and far infrared rays emitted in a large amount during the heat emission of the nanocarbon heater 210 facilitate growth of crops and animals. Further, the heating system reduces the fuel cost to 70-80% as compared to the conventional heating system using light oil.

Fig. 6 is a schematic view illustrating an air heater using the carbon fiber heat emitting source according to the embodiment as shown in Fig. 4.

A plurality of the carbon fiber heat emitting sources 210 are arranged longitudinally in a heating chamber 222, and electric wires 223 are connected to both connection terminals 205. Then, electric power is applied in parallel thereto from a power source 224 under the condition of 460 V, 10A, so that the carbon fiber heat emitting sources 210 emit heat.

In addition, in the air heater 221 as shown in Fig. 6, as a fan 225 installed at one side of the heating chamber 222 including the carbon fiber heat emitting sources 210 is operated, the air introduced through an inlet 226 is heated and then is ejected through an outlet 227, thereby increasing the temperature in an indoor space. In this manner, the air heater 221 shows a high calorific value with low power consumption during the heat emission in the indoor space. When the nanocarbon heater 210 including carbon fibers 210 therein emits heat, anions and far infrared rays favorable to the human bodies, animals and crops are also emitted while maintaining a clear indoor environment.

The above-described air heater 221 as a heating system using the carbon fiber heat emitting source 210 causes no combustion of carbon in the indoor environment, and thus maintains a clear indoor environment. In addition, the anions and far infrared rays emitted in a large amount during the heat emission of the nanocarbon heater 210 facilitate growth of crops and animals. Further, the air heater 221 reduces the fuel cost to 70-80% as compared to the conventional heating system using light oil.

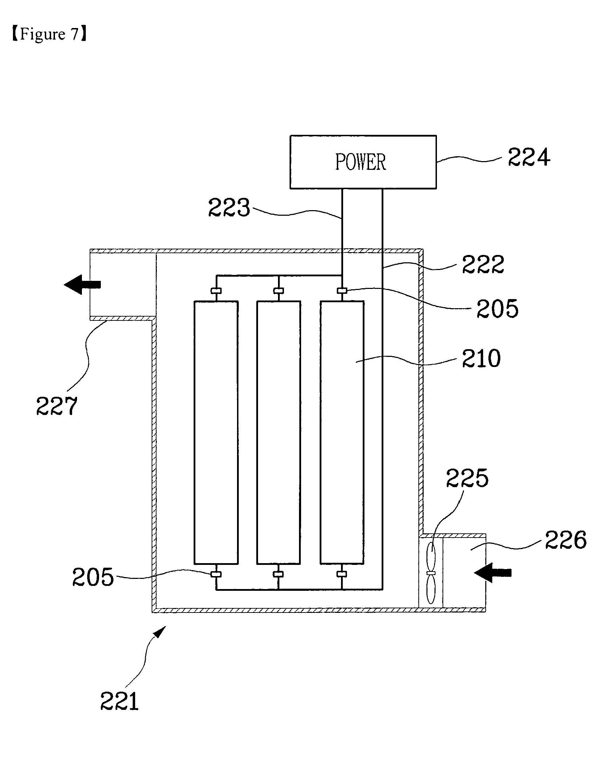

Fig. 7 is a schematic view illustrating a heating pipe as a heating system according to still another embodiment of the present invention.

The carbon fiber heat emitting sources 210 are installed inside a corrugated stainless steel pipe, PE pipe or XL pipe (232) at predetermined intervals, and electric wires 233 are connected to the connection terminals 205 of the carbon fiber heat emitting sources 210. Then, electric power is applied thereto from a power source 234 under the condition of 460 V, 10 A, so that the heating pipe 231 emits heat. The heating pipe may be installed under the floor of a space to be heated, or may be embedded under the ground to perform geothermal heating. In this manner, the heating pipe shows a high calorific value with low power consumption during the heat emission in the indoor space. When the nanocarbon heater 210 including carbon fibers 210 therein emits heat, anions and far infrared rays favorable to the human bodies, animals and crops are also emitted while maintaining a clear indoor environment.

The above-described heating system using the carbon fiber heat emitting source 210 causes no combustion of carbon in the indoor environment, and thus maintains a clear indoor environment. In addition, the anions and far infrared rays emitted in a large amount during the heat emission of the nanocarbon heater 210 facilitate growth of crops and animals. Further, the heating system reduces the fuel cost to 70-80% as compared to the conventional heating system using light oil.

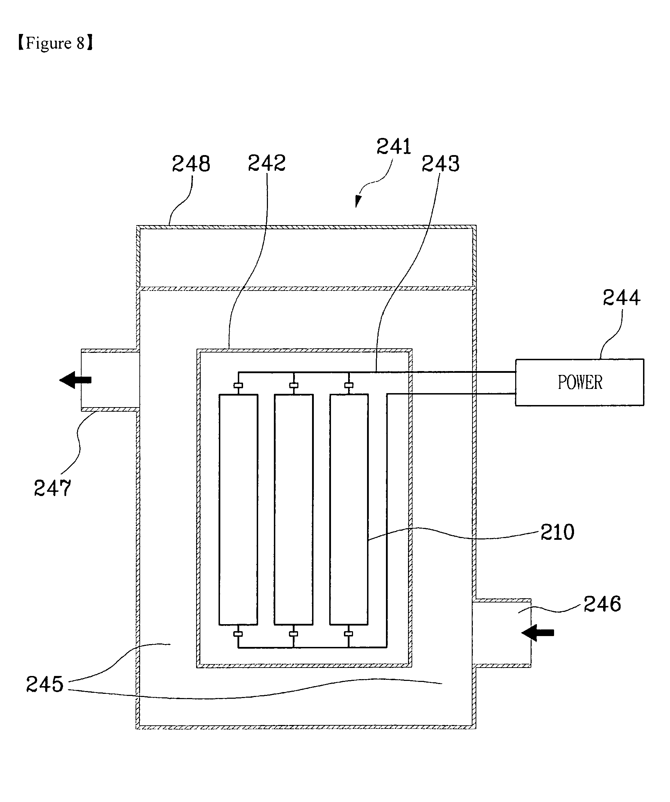

Fig. 8 is a schematic view illustrating a nanocarbon boiler as a heating system according to still another embodiment of the present invention.

As shown in Fig. 8, a plurality of the carbon fiber heat emitting sources 210 are arranged longitudinally in a heating chamber 242, and electric wires 223 are connected to both connection terminals 205. Then, electric power is applied thereto in parallel from a power source 224 under the condition of 460 V, 10A, so that the carbon fiber heat emitting sources emit heat.

Therefore, a heat exchange pipe 245 is arranged outside of the heating chamber 242, in such a manner that feed water introduced into an inlet 246 at one side of the heat exchanger is heated and then circulated through a space to be heated (not shown) after being passed through an outlet 247.

A hot water exchange chamber 248 is installed at the top of the heating chamber 242 to provide a nanocarbon boiler 241 that allows use of the heated water. In this manner, the nanocarbon boiler 241 shows a high calorific value with low power consumption during the heat emission in the indoor space, as well as allows use of hot water. When the nanocarbon boiler 210 including carbon fibers 210 therein emits heat, anions and far infrared rays favorable to the human bodies, animals and crops are also emitted while maintaining a clear indoor environment.

The above-described heating system using the carbon fiber heat emitting source 210 causes no combustion of carbon in the indoor environment, and thus maintains a clear indoor environment. In addition, the anions and far infrared rays emitted in a large amount during the heat emission of the nanocarbon heater 210 facilitate growth of crops and animals. Further, the heating system reduces the fuel cost to 70-80% as compared to the conventional heating system using light oil.

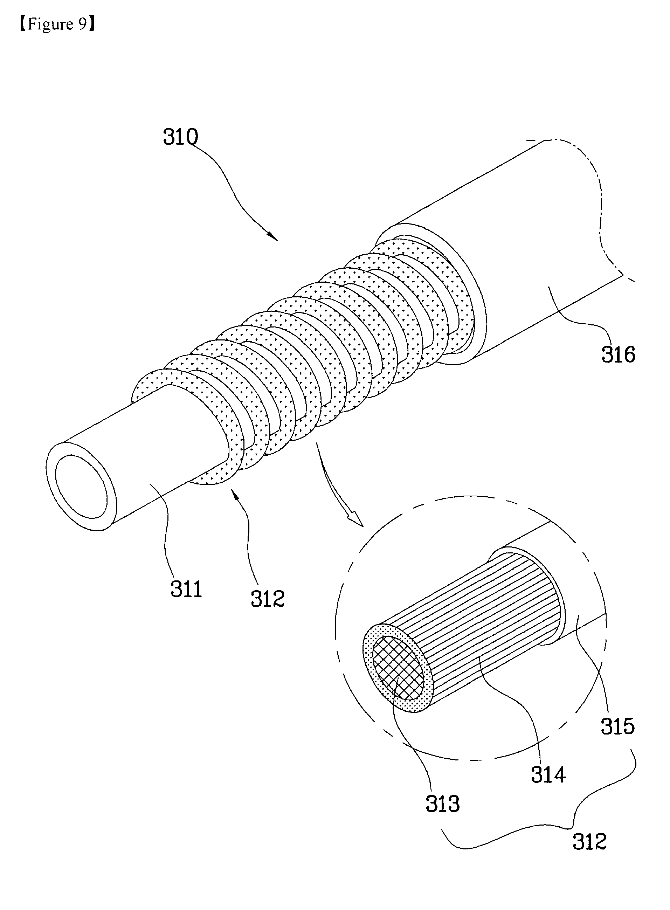

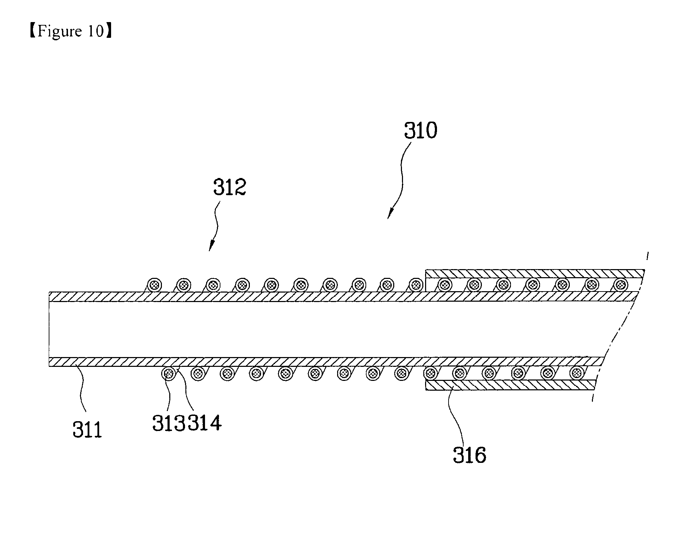

Fig. 9 is a perspective view illustrating a carbon fiber heat emitting source according to another embodiment of the present invention, and Fig. 10 is a sectional view of the carbon fiber heat emitting source as shown in Fig. 9.

As shown in Figs. 9 and 10, the carbon fiber heat emitting source 210 for a heat exchanger includes a water channel pipe 311 through which water flows, a carbon fiber heat emitting wire 312 wound on the water channel pipe 311, and a heat resistant coating layer 316 with which the water channel pipe and the carbon fiber heat emitting wire are surrounded.

The water channel pipe 310 is formed by molding a metal, such as aluminum or copper, having high heat conductivity into a hollow pipe through which water flows. The carbon fiber heat emitting wire 312 is wound on the outer circumferential surface of the water channel pipe in a spiral shape at predetermined intervals.

The carbon fiber heat emitting wire 312 wound on the water channel pipe 311 is formed by combining carbon fibers 313 with glass fibers 314 and binding them with an inorganic heat resistant ceramic adhesive 315.

The carbon fiber heat emitting wire 312 is formed by providing a bundle of two or more strands of carbon fibers 313 emitting heat at high temperature upon the application of electricity and has a predetermined length. When providing a bundle of carbon fibers 313, a predetermined amount of glass fibers 314 having the same length are combined with the carbon fibers 313.

According to the combination of the carbon fibers 313 with the glass fibers 314, the glass fibers 314 having high tensile strength against the external force, including tension or bending force applied to either or both sides of the carbon fibers 111, function to support the carbon fibers 313. Thus, the glass fibers 314 prevent the carbon fibers 313 from being damaged upon the winding on the outer surface of the water channel pipe 311 or upon the application of external force, and ensure high safety.

The combination of the carbon fibers 313 with the glass fibers 314 is made by controlling the ratio of the carbon fibers 313 to the glass fibers 314 to 60%-95% : 40%-5%. That is, a high proportion of carbon fibers 313 may be used to increase the calorific value and heat efficiency. Otherwise, a relatively high proportion of the glass fibers 314 may be used to ensure high tensile strength and safety. Thus, the combination ratio may be varied depending on the particular use and desired calorific value.

Although the carbon fibers 313 have many advantageous, including high heat conductivity, high strength and low heat expansion behavior, they are limited in use because of their low oxidation stability at high temperature.

In other words, carbon fibers start to cause oxidation generally at a temperature of 500°C or higher, although the temperature may vary depending on the particular method for producing carbon fiber materials or internal atomic arrangement. At a relatively low temperature range, oxygen infiltrates into the pores of carbon due to the low reactivity of carbon and causes diffusion, resulting in the overall oxidation inside of carbon. At a relatively high temperature range, carbon has higher reactivity than oxygen, and oxygen cannot infiltrate into carbon. Thus, surface diffusion occurs while receiving carbon from an oxide film present on the surface of a carbonaceous material. At a medium temperature range, both types of reactions occur, pores are formed on the surface of carbon as the oxidation proceeds, and oxygen diffuses into carbon to cause oxidation.

Therefore, the carbon fibers 313 undergo rapid oxidation when they emit heat at high temperature. As a result, the carbon fibers 313 show poor lifespan, a low calorific value and low efficiency. In order to prevent such oxidation and to fix the carbon fibers in a predetermined shape, it is required to coat the outer surface of the bundle of the carbon fibers 313 and the glass fibers 314 with the inorganic heat resistance ceramic adhesive 315 so that the fibers are integrated with each other. In this manner, it is possible to prevent reaction with oxygen, i.e. oxidation, and to maintain a desired shape.

The inorganic heat resistant ceramic adhesive 315 serves to melt a compound resistant against oxidation at low temperature so that the compound fills or blocks a passage of carbon in the carbon fibers 313 and the glass fibers 314, as well as binds the carbon fibers 313 integrally with the glass fibers 314 in the bundle. The inorganic heat resistant ceramic adhesive 315 includes silicon dioxide (SiO₂), zirconia (ZrO₂) or other ceramic ingredients, and is applied onto the bundle of the glass fibers 313 and the glass fibers 314 to a thickness of 0.3 mm-0.5 mm, followed by drying. The inorganic heat resistant adhesive 315 prevents oxidation of the carbon fibers 313, imparts heat resistant even at about 1,700°C due to the silicon dioxide, zirconia and ceramic ingredients, discharges no environmental pollutants, and binds and fixes the carbon fibers integrally with the glass fibers.

In addition, metallic connection terminals (not shown) supplying electricity are connected to both ends of the bundle of the carbon fibers 313 bound with the glass fibers 314 by the inorganic heat resistant ceramic adhesive 315, thereby providing a carbon fiber heat emitting wire 312. The carbon fiber heat emitting wire 312 uses carbon fibers 313, and thus has such advantages as high heat conductivity, high strength and low heat expansion behavior. When applying electricity to the carbon fibers 313 through the connection terminals, the carbon fiber heat emitting wire emits heat at high temperature more rapidly with lower power consumption than the conventional heat emitting source using nichrome wires, thereby significantly reducing electric power consumption. Further, the use of a predetermined amount of glass fibers 314 having high tensile strength prevents breakage of the carbon fibers 313, thereby improving the safety. Moreover, the outer surface of the carbon fiber heat emitting wire is coated with the inorganic heat resistant ceramic adhesive 315 and the carbon fibers are bound integrally with the glass fibers, thereby preventing oxidation of the carbon fibers 313 and increasing the lifespan.

The carbon fiber heat emitting wire 312 obtained as described above is wound on the outer circumferential surface of a water channel pipe 311, and then further surrounded with a heat resistant coating layer 316 formed of a heat resistant coating material including glass fibers or insulation materials having an insulation effect and deformation resistance at high temperature. In this manner, a carbon fiber heat emitting source 310 for a heat exchanger is provided according to the present invention.

Herein, the carbon fiber heat emitting wire 312 shows high heat efficiency since the adjacent carbon fibers 313 cause thermal fission to emit heat at higher temperature in a short time. For this reason, the carbon fiber heat emitting wire 312 is wound on the water channel pipe 311 preferably at an interval of about 2 mm to 20 mm.

The carbon fiber heat emitting source 310 as described above includes the carbon fiber heat emitting wire 312 using carbon fibers 313 emitting heat at high temperature even with low power consumption, and thus has such advantages as high heat conductivity, high strength and low heat expansion behavior. In addition, the carbon fiber heat emitting wire 312 emits heat at high temperature more rapidly with lower power consumption than the conventional heat emitting source using nichrome wires, thereby significantly reducing electric power consumption.

In addition to the above, the use of a predetermined amount of glass fibers 314 having high tensile strength prevents breakage of the carbon fibers 313, thereby improving the safety. Moreover, the outer surface of the carbon fiber heat emitting wire is coated with the inorganic heat resistant ceramic adhesive 315 and the carbon fibers are bound integrally with the glass fibers, thereby preventing oxidation of the carbon fibers 313 and increasing the lifespan.

Further, it is possible to prevent electrical accidents caused by disconnection, electric leakage, electric shock or overheating, thereby providing improved safety. Since the carbon fiber heat emitting wire 312 is wound on and in close contact with the water channel pipe 311, it transfers heat directly to the water flowing through the water channel pipe 311, thereby providing high heat exchange efficiency and producing hot water in a short time.

Particularly, the heat resistant coating layer 316 prevents the heat generated from the carbon fibers 313 from being discharged to the exterior, and thus further improves heat efficiency. The heat resistant coating layer 316 also has high electrical insulation property to prevent electrical accidents caused by disconnection, electric leakage, electric shock or overheating, and thus allows users to handle the carbon fiber heat emitting source 310 for a heat exchanger more safely and easily.

The carbon fiber heat emitting source 310 for a heat exchanger may be applied to an electric boiler 301 to produce hot water effectively and to obtain an electric boiler 310 with high efficiency under low power consumption.

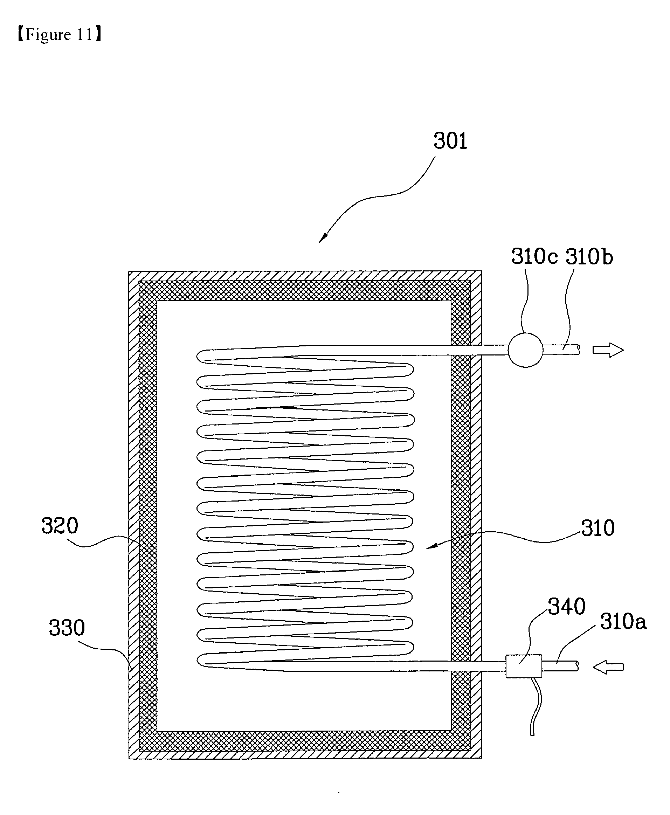

Fig. 11 is a schematic view illustrating an electric boiler as a heating system according to yet another embodiment of the present invention.

As shown in Fig. 11, the electric boiler 310 has a general boiler shape whose internal part is vacant, and is provided with the carbon fiber heat emitting source 310 for a heat exchanger inside of an outer casing 330 having a glass fiber heat insulation layer 320. To both ends of the water channel pipe 311 of the carbon fiber heat emitting source 310 for a heat exchanger, a cold water inlet 310a for introducing cold water from the exterior to the internal part of the water channel pipe 311 and a hot water outlet 310b for discharging hot water heated through the carbon fiber heat emitting source 310 for a heat exchanger to the exterior are linked. In addition, a circulation pump 310c is linked to allow the water in the water channel pipe 311 of the carbon fiber heat emitting source 310 for a heat exchanger to be circulated continuously through the cold water inlet 310a and the hot water outlet 310b. In other words, cold water introduced into the cold water inlet 310a is passed through the water channel pipe 311, and then is discharged from the hot water outlet 310b.

In addition, the connection terminals connected to the carbon fibers 313 of the carbon fiber heat emitting source 310 for a heat exchanger are linked to a power source 340 formed at one side of the outer casing 330, so that the electricity supplied from the power source 340 is applied to the carbon fibers 313 and thus allows the carbon fibers 313 emit heat at high temperature. By adjusting the amount of electricity applied from the power source 340 or by using a timer, it is possible to control the heat emission temperature of the carbon fibers 313 and to control the driving condition and time of the electric boiler.

Further, the electric boiler 301 is provided with a glass fiber heat insulation layer 320 on the inner surface of the outer casing 330 to prevent the heat from being discharged out of the carbon fiber heat emitting source 310 for a heat exchanger, thereby further improving the heat efficiency of the electric boiler 301.

According to the electric boiler 301 as described above, when cold water is introduced into the water channel pipe 311 of the carbon fiber heat emitting source 310 for a heat exchanger through a fold water inlet 310a from the exterior via the circulation pump 310c, the carbon fibers 313 emitting heat upon the application of electricity from the power source 340 heats the cold water flowing through the water channel pipe 311, thereby performing heat exchange. In this manner, hot water is produced and then is discharged out of the carbon fiber heat emitting source 310 for a heat exchanger through the hot water outlet 310b so that is may be used for heating.

Particularly, the carbon fiber heat emitting source 310 for a heat exchanger is wound many times in a coil-like shape inside of the outer casing 330. Therefore, it is possible to heat the cold water passing through the water channel pipe 311 to a temperature sufficient for heating or higher temperature by increasing the unit length of the carbon fiber heat emitting source 310 for a heat exchanger.

Although the carbon fiber heat emitting source 310 for a heat exchanger is shown to be inserted directly into the outer casing 330 of the electric boiler 301 in Fig. 11, it may be used after being inserted into a pipe, such as an aluminum pipe or copper pipe, having high anti-corrosive property and strength. In the latter case, it is possible to protect the carbon fiber heat emitting source 310 for a heat exchanger, thereby providing improved safety and service time.

The electric boiler 301 using the carbon fiber heat emitting source 310 for a heat exchanger as described above performs heat emission at high temperature with low power consumption, thereby significantly reducing electric power consumption. The electric boiler 301 prevents various electrical accidents to provide high safety. The electric boiler 301 also has a glass fiber heat insulation layer 320 to provide high heat efficiency and is provided with a simple and compact structure, and thus may be applied with ease to various industrial fields.

While the present invention has been described with respect to the specific embodiments, it will be apparent to those skilled in the art that various changes and modifications may be made without departing from the spirit and scope of the invention as defined in the following claims.

## Claims

1. A carbon fiber heat emitting source, comprising:
heat emitting fibers formed by combining at least one carbon fibers with glass fibers at a predetermined ratio;
connection terminals formed at both ends of the heat emitting fibers so that electricity is applied thereto from an electricity supplying wire; and
a coating member with which the surfaces of the heat emitting fibers and the connection terminals are coated.

2. The carbon fiber heat emitting source according to claim 1, wherein the coating member is a silicone coating layer formed on and in contact with the surfaces of the heat emitting fibers and the connection terminals.

3. The carbon fiber heat emitting source according to claim 1, wherein the heat emitting fibers are obtained by combining 60%-95% of carbon fibers with 40%-5% of glass fibers.

4. The carbon fiber heat emitting source according to claim 4, wherein the heat emitting fibers are obtained by combining carbon fibers, glass fibers and at least one polyester fiber.

5. The carbon fiber heat emitting source according to claim 1, wherein the heat emitting fibers are wound on an aluminum rod at predetermined intervals, and heated to a temperature of 1500-2000°C in a heating chamber so that multiple strands of the fibers are bound integrally with each other to form a spiral shape.

6. The carbon fiber heat emitting source according to claim 1, wherein the connection terminals are formed integrally with both ends of the heat emitting fibers by welding nickel wires to the both ends.

7. The carbon fiber heat emitting source according to claim 1, wherein the coating member is a quartz pipe, the internal space of which is filled with LPG and hydrogen and receives and seals the heat emitting fibers in such a manner that only a portion of the connection terminals is exposed from the both ends.

8. The carbon fiber heat emitting source according to claim 7, which further includes:
a reflection plate installed on the rear surface of the quartz pipe to reflect the heat;
electric wires connected to the connection terminals at both ends of the quartz pipe; and
a power source for supplying electric power through the electric wires to heat the carbon fibers.

9. The carbon fiber heat emitting source according to claim 7, which further includes:
a heating pipe formed of a corrugated stainless steel pipe, polyethylene (PE) pipe or XL pipe and receiving a plurality of the quartz pipes aligned in a line at predetermined intervals;
electric wires connected to the connection terminals at both ends of the quartz pipes provided in the heating pipe in such a manner that the quartz pipes are connected in parallel; and
a power source for supplying electric power through the electric wires to heat the carbon fibers.

10. The carbon fiber heat emitting source according to claim 1, which further comprises a water channel pipe through which water flows, wherein the heat emitting fibers are wound along the outer circumferential surface of the water channel pipe in a spiral shape at an interval of 2 mm to 20 mm, and the coating member is a heat resistant coating layer with which the water channel pipe and the heat emitting fibers are surrounded.

11. The carbon fiber heat emitting source according to claim 10, wherein the heat emitting fibers are formed by providing a bundle of carbon fibers combined with a predetermined amount of glass fibers, and by coating the outer surface of the bundle with an inorganic heat resistant ceramic adhesive containing silicon dioxide, zirconia and ceramic ingredients to a thickness of 0.3 mm to 0.5 mm so that the fibers are bound integrally with each other.

12. A heating system using a carbon fiber heat emitting source for heating water introduced into a hot water tank, comprising:
the carbon fiber heat emitting source as defined in claim 2, formed inside of the hot water tank for heating the water introduced thereto;
a water feeding line for feeding the water heated in the hot water tank to the exterior;
a piping line through which the water heated in the hot water tank is circulated;
a temperature sensor for detecting the temperature of the hot water in the hot water tank; and
a control unit for controlling the electricity supply from the electric wires depending on the temperature of the hot water in the hot water tank detected by the temperature sensor.

13. The heating system using a carbon fiber heat emitting source according to claim 12, which further comprises:
a cold water feeding pipe through which drinking water is introduced into the hot water tank; and
a hot water supplying pipe through which the hot water heated in the hot water tank is supplied.

14. The heating system using a carbon fiber heat emitting source according to claim 12, wherein the heat emitting source is provided in the form of a coil wound in the vertical direction at an interval of about 2 mm to 5 mm inside of the hot water tank.

15. A heating system using a carbon fiber heat emitting source, comprising:
a heating chamber having an internal space, an inlet formed at one side thereof for introducing air, and an outlet formed at the other side thereof for ejecting heated air;
a fan formed in the vicinity of the inlet to force the external air to be sucked into the heating chamber;
a plurality of the carbon fiber heat emitting sources as defined in claim 7, aligned in parallel along the longitudinal direction in the heating chamber;
electric wires connected to the connection terminals formed at both ends of the carbon fiber heat emitting sources in such a manner that the quartz pipes are connected in parallel; and
a power source for supplying electric power through the electric wires to heat the heat emitting fibers.

16. A heating system using a carbon fiber heat emitting source, comprising:
a heat exchanger having an internal space, an inlet formed at one side thereof for introducing water, and an outlet formed at the other side thereof for ejecting heated water;
a heating chamber formed in the internal space of the heat exchanger;
a plurality of the carbon fiber heat emitting sources as defined in claim 7, aligned in parallel along the longitudinal direction in the heating chamber;
electric wires connected to the connection terminals formed at both ends of the carbon fiber heat emitting sources in such a manner that the quartz pipes are connected in parallel;
a power source for supplying electric power through the electric wires to heat the heat emitting fibers; and
a hot water exchange chamber formed at the top of the heating chamber for warming hot water stored in the heating chamber.

17. A heating system using a carbon fiber heat emitting source, comprising:
an outer casing including a glass fiber heat insulating layer on the inner surface thereof and having an internal space;
the carbon fiber heat emitting source as defined in claim 10, provided in the outer casing;
a cold water inlet formed at one end of the carbon fiber heat emitting source for introducing cold water into the water channel pipe;
a hot water outlet formed at the other end of the carbon fiber heat emitting source for discharging hot water heated through the water channel pipe to the exterior;
a circulation pump for circulating water in the water channel pipe through the cold water inlet and the hot water outlet; and
a power source connected to both ends of the carbon fiber heat emitting source for supplying electricity.
